# FASCICULE DE BREVET EUROPEEN

(11) **EP 2 503 090 B1**
(45) Date de publication et mention de la délivrance du brevet: **16.03.2016**
(21) Numéro de dépôt: 12160052.2
(22) Date de dépôt: 19.03.2012
(51) Int. Cl.: E06B 9/17, E06B 9/76, F16J 3/04, E06B 9/78

(54) **Dispositif de sortie de coffre de volet roulant, pour le passage d'un organe de commande à travers une planche, et coffre de volet roulant muni d'un tel dispositif**
Ausgangshalterung eines Rollladenkastens für den Durchgang eines Steuerorgans über eine Platte, und mit einer solchen Halterung ausgestatteter Rollladenkasten
Delivery frame of a roller-shutter casing, for passing a control member through a plank, and roller-shutter casing provided with such a frame

(30) Priorité: 21.03.2011 FR 1152283
(43) Date de publication de la demande: 26.09.2012
(73) Titulaire: Zurfluh Feller, 25150 Autechaux-Roide (FR)
(72) Inventeur: Olmi, Marc, 25150 PONT DE ROIDE (FR); Allemand, Jean-Marie, 25190 VILLARS-SOUS-DAMPJOUX (FR)
(74) Mandataire: Cabinet Armengaud Aîné

(56) Documents cités:
- DE-A1- 19 756 160
- DE-U1- 20 112 675
- FR-A1- 2 923 259
- US-A1- 2006 199 653
- US-A1- 2010 101 508

## Description

L'invention est relative à un dispositif de sortie de coffre de volet roulant, pour le passage d'un organe de commande, tringle ou sangle, à travers une planche du coffre.

Le document FR 2 923 259 A décrit un dispositif de sortie de coffre de volet roulant selon le préambule de la revendication 1.

L'évolution de la réglementation thermique impose que les bâtiments soient le moins possible gourmands en énergie. Un critère important est une très bonne isolation des parois. Il faut également une conception bioclimatique du bâtiment afin de profiter au mieux des apports solaires.

Pour réduire les déperditions thermiques, il faut assurer une très bonne étanchéité à l'air du bâtiment. Il n'est pas question de réaliser un local complètement hermétique, mais au contraire de ventiler mécaniquement les pièces de l'habitat en maîtrisant avec précision le déplacement de l'air dans les différentes pièces de cet habitat. La solution passe le plus souvent par l'installation d'une ventilation mécanique contrôlée (VMC) à simple ou double flux.

Pour satisfaire cette exigence d'étanchéité des parois, il faut réduire tous les interstices qui peuvent mettre en contact le milieu extérieur avec le milieu intérieur de l'habitat.

Au niveau des coffres de volet roulant, dans le cas d'une commande manuelle, il faut assurer une liaison entre l'organe de commande, tringle ou sangle, situé à l'intérieur de l'habitat et un moyen d'entraînement, treuil ou poulie, ou système d'engrenages, en bout de l'arbre d'enroulement du tablier du volet, situé dans le coffre de volet roulant et en contact avec l'air extérieur.

Le coffre de volet roulant est réalisé le plus souvent avec des parois alvéolaires en matière plastique. Pour assurer le passage de l'organe de commande, notamment une tringle, un installateur réalise le plus souvent un perçage cylindrique à l'aide d'un foret et d'une perceuse, à une extrémité ou à l'autre du coffre. Au travers de ce perçage, l'installateur fait passer la tringle de commande et vient fixer, contre la face extérieure de la planche, un bâti de sortie de coffre dans lequel est généralement logée une articulation sous forme d'une rotule munie d'un prolongement pour raccordement du côté extérieur. Le perçage ainsi réalisé au travers de la planche diminue la performance thermique globale du coffre. Dans le cas d'une paroi alvéolaire, le passage ainsi formé au travers de la planche présente en outre l'inconvénient de permettre une entrée et une circulation d'air entre les différentes chambres délimitées par des cloisons dans les alvéoles de la planche. Cet air qui n'est plus immobile nuit à la performance d'isolation thermique de la paroi.

De plus, le flux d'air entré dans l'alvéole, par suite du perçage, cherche à ressortir par les extrémités de la planche. L'étanchéité entre un embout de coffre, prévu à une extrémité de ce coffre, et les parois du coffre, notamment la planche, est réalisée le plus souvent au droit de la face intérieure. Dans ces conditions, l'air qui est entré dans des alvéoles peut passer du milieu extérieur vers le logement.

Dans le cas où l'organe de commande est constitué d'une sangle, une ouverture est également prévue dans la planche pour le passage de la sangle, ce qui crée aussi un passage pour l'air.

L'invention a pour but, surtout, d'empêcher, ou tout au moins de diminuer, le flux d'air qui peut passer de l'extérieur vers l'intérieur du local par suite de la traversée de la planche de coffre par l'organe de commande, et ceci d'une manière simple, économique et facile à mettre en oeuvre.

Un dispositif de sortie de coffre de volet roulant comprenant au moins une planche de coffre présentant un orifice pour le passage d'un organe de commande, tringle ou sangle, de l'enroulement et du déroulement du volet roulant, un bâti de sortie de coffre et un dispositif d'étanchéité pour l'organe de commande au niveau de la traversée de la planche, est divulgué selon l'invention à la revendication 1.

L'obtention d'une étanchéité efficace à la traversée de la planche du coffre de volet roulant par la tringle ou la sangle de commande contribue à diminuer la consommation en énergie du local équipé du volet roulant pour le maintien d'une température déterminée dans ce local.

Avantageusement, un collet, ou une lumière, est prévu à l'extrémité de la gaine éloignée de la platine, de plus faible section de passage que la gaine, pour serrer l'organe de commande, tringle ou sangle, à l'intérieur du coffre une fois installé.

La transition entre la gaine cylindrique et le collet peut être assurée par une zone annelée de section transversale décroissante jusqu'au collet, permettant d'accompagner l'inclinaison de la tringle par rapport à la direction orthogonale à la platine, tout en maintenant l'étanchéité autour de la tringle.

Selon une variante, la transition entre la gaine cylindrique et le collet, ou la lumière, est assurée par une collerette dans un plan sensiblement orthogonal à l'axe géométrique de la gaine. La collerette peut comporter une pluralité de fentes radiales, de préférence espacées de manière régulière, pour faciliter la déformation de cette collerette en fonction de l'angle d'inclinaison pris par la tringle. Un voile de matière souple peut fermer chaque fente radiale.

Avantageusement, la gaine cylindrique présente une section transversale suffisante pour s'appliquer de manière étanche contre les bords de l'orifice de passage dans la planche du coffre, et assurer une fermeture radiale des parois et/ou cloisons de la planche, en particulier lorsque la planche est alvéolée.

Généralement, la gaine cylindrique présente une section transversale circulaire, et son axe géométrique est orthogonal à la platine en l'absence de sollicitations tendant à la déformer.

Avantageusement, la platine présente un contour rectangulaire, et la gaine cylindrique est située au voisinage d'un angle du contour, une zone de la platine restant libre et comportant des trous pour le passage de moyens de fixation sur une planche de coffre. En règle générale, cette platine prend la forme du bâti auquel elle est associée. En variante, cette platine pourrait présenter un contour circulaire afin de créer simplement un rebord qui viendrait assurer l'étanchéité entre le bâti et la planche du coffre

Le dispositif d'étanchéité constitué de la platine, de la gaine et du collet, ou lumière, est avantageusement réalisé d'une seule pièce, en une matière souple, en particulier en matière élastomère.

Le bâti de sortie peut comporter un logement avec une rotule munie, d'un côté, d'un prolongement pour accouplement à une tige de manoeuvre située dans le local, et le dispositif d'étanchéité est installé du côté opposé à ce prolongement.

L'invention est également relative à un coffre de volet roulant à planche alvéolée comportant des chambres séparées par des cloisons, avec un orifice de passage de l'organe de commande, tringle ou sangle, qui traverse sensiblement orthogonalement les cloisons et alvéoles, caractérisé en ce qu'il comporte un dispositif de sortie de coffre de volet roulant tel que défini précédemment, et en ce que la gaine du dispositif d'étanchéité est au contact étanche du bord des parois et/ou cloisons limitant le passage pour l'organe de commande.

L'invention consiste, mises à part les dispositions exposées ci-dessus, en un certain nombre d'autres dispositions dont il sera plus explicitement question ci-après à propos d'un exemple de réalisation avec référence aux dessins annexés, mais qui n'est nullement limitatif. Sur ces dessins
Fig. 1 est une vue en coupe verticale d'un coffre de volet roulant avec bâti de sortie et dispositif d'étanchéité selon l'invention.
Fig. 2 est une vue en perspective, à plus grande échelle, du dispositif d'étanchéité de l'invention.

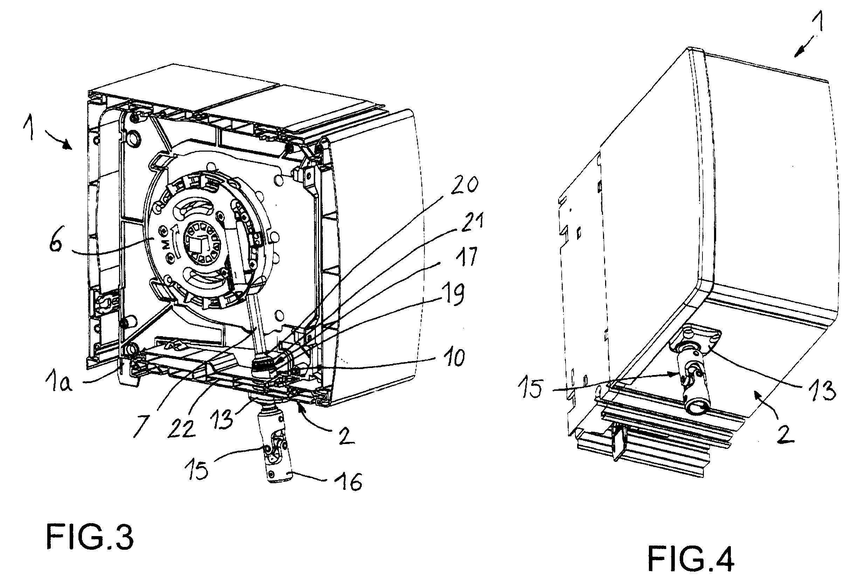

Fig. 3 est une vue en perspective, à plus petite échelle, de l'intérieur d'une extrémité du coffre de volet roulant de Fig. 1.
Fig. 4 est une vue en perspective de dessous de l'extrémité du coffre de volet roulant fermé.
Fig. 5 est une vue de dessus d'une variante du dispositif d'étanchéité de l'invention.
Fig. 6 est une vue en coupe suivant la ligne VI-VI de Fig.5, et
Fig. 7 est une vue en perspective du dispositif d'étanchéité de Fig.5

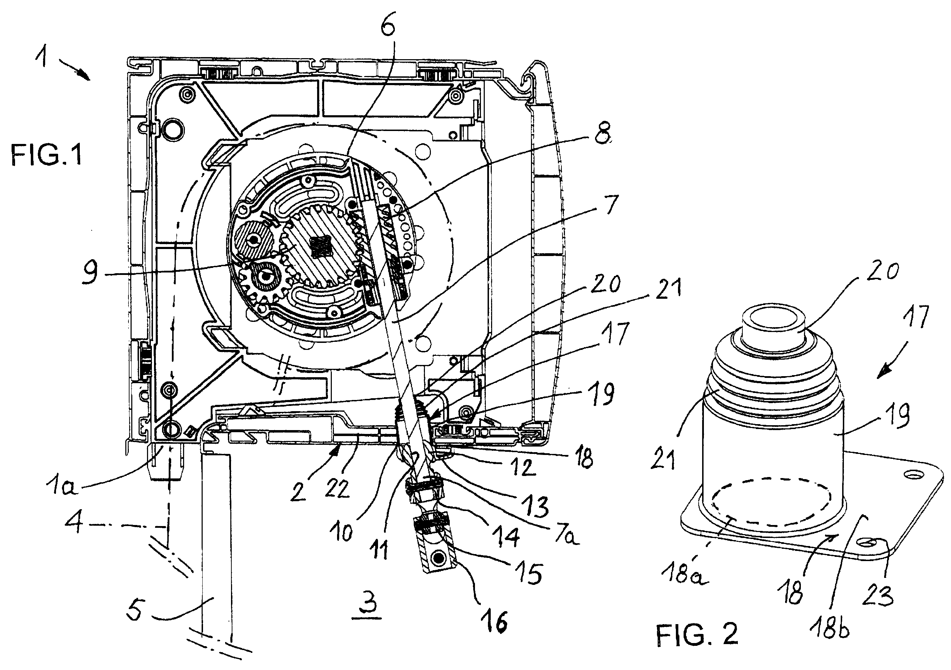

En se reportant à Fig. 1 des dessins, on peut voir un coffre de volet roulant 1 à section transversale sensiblement rectangulaire, constitué de parois assemblées en matière plastique à structure alvéolaire. La paroi inférieure 2 horizontale constitue la planche du coffre. La partie du coffre située sur la gauche selon la représentation de Fig. 1 se trouve à l'extérieur d'un local 3 de sorte que le volet 4 schématiquement représenté en trait mixte peut se dérouler, à travers un passage 1 a, devant une ouverture 5, porte, fenêtre ou baie, du local 3.

L'intérieur du coffre 1 est en communication avec le milieu extérieur par ce passage 1 a.

Dans l'exemple représenté, l'enroulement et le déroulement du volet roulant est commandé manuellement à l'aide d'un treuil 6 monté en bout d'arbre de volet, à une extrémité du coffre. En variante, l'entraînement en rotation pourrait être assuré par un couple d'engrenages coniques.

La commande de la rotation du treuil 6 est assurée par un organe constitué, selon l'exemple représenté, par une tringle 7 rotative qui entraîne, au voisinage de son extrémité située à l'intérieur du coffre, un pignon 8 hélicoïdal qui engrène avec une roue dentée 9 coaxiale à l'arbre d'enroulement du volet roulant, lié en rotation à cette roue 9.

La tringle de commande 7 passe au travers d'un orifice 10 pratiqué dans la planche 2 pour sortir par son extrémité inférieure 7a dans le logement 3 à une distance réduite, notamment de quelques centimètres, au-dessous de la planche 2. Cette extrémité 7a est engagée dans un logement 11 prévu dans une rotule 12 sphérique montée dans une cavité conjuguée d'un bâti 13 de sortie de coffre fixé, notamment par des vis, contre la face inférieure de la planche 2. La rotule 12 est munie d'un prolongement cylindrique 14 sur lequel est fixée une extrémité d'un joint de transmission 15, du type joint de cardan. Le joint 15 est lié en rotation à une pièce 16 fixée sur une tige de manoeuvre (non représentée) s'étendant dans le local 3.

La tringle de commande 7 présente généralement une inclinaison par rapport à la direction verticale lorsque le coffre est en place, cette inclinaison restant fixe. Par contre, la tige de manoeuvre et la pièce 16 peuvent avoir une inclinaison variable. Seul le mouvement de rotation de la pièce 16 et de la tige autour de son axe géométrique est transmis par le joint 15 à la tringle 7.

L'entraînement du volet roulant pourrait être assuré, en variante, par une sangle, non représentée, coopérant avec une poulie, la sangle traversant un orifice pratiqué dans la planche 2.

Selon l'invention, un dispositif d'étanchéité 17 est prévu pour l'organe de commande, à savoir la tringle 7 selon l'exemple représenté, au niveau de sa traversée de la planche 2.

Ce dispositif d'étanchéité 17 est réalisé en matière souple, notamment en matière élastomère ; il comporte une platine 18 (Fig. 2) avec orifice de passage 18a pour la tringle. La platine 18 est propre à être serrée contre la face extérieure de la planche 2 par le bâti de sortie 13 pour empêcher le passage d'un flux d'air entre la paroi du coffre constituée par la planche 2 et le bâti 3 de sortie.

Le dispositif 17 comporte en outre une gaine cylindrique 19 liée à la platine 18 et faisant saillie sur cette platine autour de l'orifice de passage 18a d'une longueur suffisante pour traverser la planche 2 et entourer une zone de la tringle 7 à l'intérieur du coffre, comme visible sur Fig. 1. De préférence, la gaine 19 présente une section droite circulaire et son diamètre est supérieur à celui de la tringle 7, notamment de l'ordre du double de ce diamètre.

Le dispositif 17 comporte en outre un collet 20 à l'extrémité de la gaine 19 éloignée de la platine 18. Le diamètre du collet est plus faible que celui de la gaine 19. Le diamètre intérieur du collet 20 est inférieur au diamètre de la tringle 7 de manière à exercer un serrage étanche de cette tringle à l'intérieur du coffre.

Avantageusement, la transition entre la gaine cylindrique 19 et le collet 20 est assurée par une zone annelée 21 (Fig. 2) de section transversale décroissante jusqu'au collet. Cette zone annelée permet de bien accompagner l'inclinaison de la tringle 7 par rapport à la platine 18, tout en maintenant l'étanchéité autour de la tringle 7.

La tringle 7 présente généralement une section transversale limitée par un contour polygonal, notamment octogonal. Le collet 20 est adapté pour assurer l'étanchéité sur un tel contour.

Comme visible sur Fig. 1, la planche 2 présente une structure alvéolaire avec au moins une cloison intermédiaire 22 entre sa face extérieure et sa face intérieure. L'orifice 10, généralement réalisé sur place lors du montage du volet roulant par l'installateur, communique avec les alvéoles délimités par les parois de la planche 2 et la cloison 22. De l'air peut ainsi être mis en circulation dans ces alvéoles si une communication existe avec le volume intérieur du coffre.

Selon l'invention, la gaine cylindrique 19 présente une section transversale suffisante pour s'appliquer de manière étanche contre les bords de l'orifice de passage 10 délimité par les parois et les cloisons de la planche alvéolaire 2 et assurer la fermeture radiale de la ou des paroi(s) de la planche 2. Ainsi, toute circulation d'air dans ces alvéoles, nuisible à une bonne isolation thermique, est empêchée.

La gaine cylindrique 19 présente généralement une section circulaire avec un axe géométrique orthogonal à la platine 8, en l'absence de sollicitations tendant la déformer.

Comme visible sur Fig. 2, la platine 18 présente un contour rectangulaire et la gaine cylindrique 19 est sensiblement tangente à un petit côté et aux deux grands côtés du contour. Une zone 18b de la platine est libre, à l'écart de la gaine 19, et comporte des trous 23 pour le passage de moyens de fixation, notamment des vis, du bâti 13 sur la planche 2. Cette partie libre 18 suit sensiblement le contour extérieur du bâti 13.

En variante, la platine pourrait présenter un contour circulaire, concentrique à la gaine 19, afin de créer simplement un rebord qui viendrait assurer l'étanchéité entre le bâti et la planche du coffre

Le dispositif d'étanchéité 17 est avantageusement réalisé d'une seule pièce, en particulier en matière élastomère.

Ce dispositif d'étanchéité 17 peut constituer une pièce complémentaire à un bâti 13 de sortie de coffre existant, mais cette pièce d'étanchéité peut également être intégrée directement à la conception du bâti de sortie 13.

Le dispositif d'étanchéité de l'invention assure une triple fonction :
- à l'aide de la platine 18 plane, le dispositif 17 assure l'étanchéité entre le bâti 13 de sortie de coffre et la planche 2 de coffre ;
- ce même dispositif 17 assure à l'aide de la gaine cylindrique 19 la fermeture radiale des parois et de la cloison 22 de la planche alvéolaire 2 au niveau de l'orifice 10 ;
- le dispositif 17 assure une étanchéité circulaire autour de la tringle 7 par son collet 20.

Bien que la tringle de commande 7 ne soit pas toujours perpendiculaire au plan de la planche 2, et puisse prendre une inclinaison par rapport à cette planche suivant la position de l'arbre d'enroulement du volet roulant situé à l'intérieur du coffre, la zone annelée 21 permet d'accompagner le mouvement angulaire d'inclinaison de la tringle 7 et de conserver l'étanchéité.

Dans le cas où l'entraînement du volet roulant serait assuré par une sangle, coopérant avec une poulie, le collet circulaire 20 serait remplacé par une lumière rectangulaire propre à serrer la sangle de manière étanche.

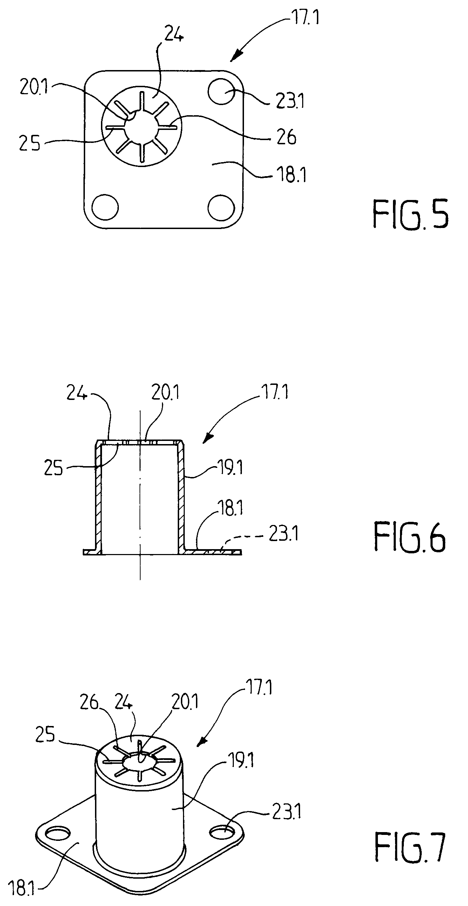

En se reportant aux Fig.5 à 7 on peut voir une variante de réalisation avantageuse du dispositif d'étanchéité 17.1 et de la gaine 19.1. Les éléments identiques à des éléments déjà décrits, ou jouant un rôle similaire, sont désignés par les mêmes références suivies de « .1 » , leur description n'étant pas reprise, ou n'étant effectuée que succinctement.

Selon cette variante, la transition entre la gaine cylindrique 19.1 et le collet 20.1 est assurée par une collerette 24 dans un plan sensiblement orthogonal à l'axe géométrique de la gaine 19.1. La collerette comporte une pluralité de fentes radiales 25, de préférence espacées de manière régulière, pour faciliter la déformation de cette collerette en fonction de l'angle d'inclinaison pris par la tringle. Un voile 26 de matière souple peut être prévu pour fermer chaque fente radiale.

Dans le cas où l'entraînement du volet roulant serait assuré par une sangle, le collet circulaire 20.1 serait remplacé par une lumière rectangulaire propre à serrer la sangle de manière étanche.

## Revendications

1. Dispositif de sortie de coffre de volet roulant comprenant au moins une planche de coffre (2) présentant un orifice (10) pour le passage d'un organe de commande (7), tringle ou sangle, de l'enroulement et du déroulement du volet roulant, un bâti de sortie (13) de coffre et un dispositif d'étanchéité (17) pour l'organe de commande au niveau de sa traversée de la planche,
**caractérisé en ce que** le dispositif d'étanchéité (17) est constitué d'une pièce (17, 17.1) en matière souple comportant une platine (18, 18.1) munie d'un orifice (18a) pour le passage de l'organe de commande, et serrée entre la face extérieure de la planche (2) de coffre et le bâti (13) de sortie de coffre, et une gaine cylindrique (19, 19.1) liée à la platine (18, 18.1) et faisant saillie sur cette platine autour de l'orifice de passage (18a), d'une longueur suffisante pour traverser la planche et entourer une zone de l'organe de commande à l'intérieur du coffre.

2. Dispositif de sortie de coffre de volet roulant, selon la revendication 1, **caractérisé en ce qu'**il comporte un collet (20, 20.1), ou une lumière, à l'extrémité de la gaine éloignée de la platine, de plus faible section que la gaine, pour serrer l'organe de commande, tringle ou sangle, à l'intérieur du coffre une fois installé.

3. Dispositif de sortie de coffre de volet roulant, selon la revendication 2, **caractérisé en ce que** la transition entre la gaine cylindrique (19) et le collet (20) est assurée par une zone annelée (21) de section transversale décroissante jusqu'au collet, permettant d'accompagner l'inclinaison d'une tringle par rapport à la direction orthogonale à la platine, tout en maintenant l'étanchéité autour de la tringle.

4. Dispositif de sortie de coffre de volet roulant, selon la revendication 2, **caractérisé en ce que** la transition entre la gaine cylindrique (19.1) et le collet (20.1), ou la lumière, est assurée par une collerette (24) dans un plan sensiblement orthogonal à l'axe géométrique de la gaine (19.1).

5. Dispositif de sortie de coffre de volet roulant, selon la revendication 4, **caractérisé en ce que** la collerette (24) comporte une pluralité de fentes radiales (25) pour faciliter la déformation de cette collerette en fonction de l'angle d'inclinaison pris par une tringle.

6. Dispositif de sortie de coffre de volet roulant, selon la revendication 5, **caractérisé en ce qu'**un voile (26) de matière souple ferme chaque fente radiale (25).

7. Dispositif de sortie de coffre de volet roulant, selon l'une quelconque des revendications précédentes, **caractérisé en ce que** la gaine cylindrique (19, 19.1) présente une section transversale suffisante pour s'appliquer de manière étanche contre les bords de l'orifice de passage (10) dans la planche du coffre, et assurer une fermeture radiale des parois et/ou cloisons de la planche, en particulier lorsque la planche est alvéolée.

8. Dispositif de sortie de coffre de volet roulant, selon l'une quelconque des revendications précédentes, **caractérisé en ce que** la gaine cylindrique (19, 19.1) présente une section transversale circulaire, et son axe géométrique est orthogonal à la platine (18, 18.1) en l'absence de sollicitations tendant à la déformer.

9. Dispositif de sortie de coffre de volet roulant, selon l'une quelconque des revendications précédentes, **caractérisé en ce que** la platine (18, 18.1) présente un contour rectangulaire, et la gaine cylindrique (19, 19.1) est situé au voisinage d'un angle du contour, une zone (18b) de la platine restant libre et comportant des trous (23, 23.1) pour passage de moyens de fixation sur une planche de coffre.

10. Dispositif de sortie de coffre de volet roulant, selon l'une quelconque des revendications précédentes, **caractérisé en ce que** le dispositif d'étanchéité (17, 17.1) constitué de la platine (18, 18.1), de la gaine (19, 19.1) et du collet (20, 20.1) ou lumière, est réalisé d'une seule pièce en une matière souple, en particulier en matière élastomère.

11. Dispositif de sortie de coffre de volet roulant, selon l'une quelconque des revendications précédentes, comportant un logement avec une rotule munie, d'un côté, d'un prolongement (14) pour accouplement à une tige de manoeuvre située dans le local, **caractérisé en ce que** le dispositif d'étanchéité (17,17.1) est installé du côté opposé à ce prolongement.

12. Coffre de volet roulant à planche (2) alvéolée comportant des chambres séparées par des cloisons (22), avec un orifice de passage (10) d'un organe de commande, tringle ou sangle, qui traverse sensiblement orthogonalement les cloisons et alvéoles, **caractérisé en ce qu'**il comporte un dispositif de sortie de coffre de volet roulant selon l'une quelconque des revendications précédentes, et **en ce que** la gaine (19) du dispositif d'étanchéité est au contact étanche du bord des parois et/ou cloisons limitant le passage pour l'organe de commande.

## Patentansprüche

1. Austrittsvorrichtung eines Rollladenkastens, umfassend wenigstens ein Kastenbrett (2), das eine Öffnung (10) für den Durchgang eines Betätigungsorgans (7), Stange oder Gurt, zum Aufwickeln und Abwickeln des Rollladens aufweist, ein Kastenaustrittsgestell (13) und eine Dichtungsvorrichtung (17) für das Betätigungsorgan im Bereich seiner Durchquerung des Bretts,
**dadurch gekennzeichnet, dass** die Dichtungsvorrichtung (17) von einem Teil (17, 17.1) aus flexiblem Material gebildet ist, das eine Platte (18, 18.1), die mit einer Öffnung (18a) für den Durchgang des Betätigungsorgans ausgestattet und zwischen der Außenseite des Kastenbretts (2) und dem Kastenaustrittsgestell (13) festgeklemmt ist, sowie eine zylindrische Hülse (19, 19.1) umfasst, die mit der Platte (18, 18.1) verbunden ist und an dieser Platte um die Durchgangsöffnung (18a) herum um eine ausreichende Länge vorspringt, um das Brett zu durchgreifen und einen Bereich des Betätigungsorgans innerhalb des Kastens zum umschließen.

2. Austrittsvorrichtung eines Rollladenkastens, nach Anspruch 1, **dadurch gekennzeichnet, dass** sie einen Bund (20, 20.1), oder eine Öffnung, an dem von der Platte entfernten Ende der Hülse, mit einem geringeren Querschnitt als die Hülse umfasst, um das Betätigungsorgan, Stange oder Gurt, innerhalb des Kastens festzuklemmen, sobald es angebracht ist.

3. Austrittsvorrichtung eines Rollladenkastens, nach Anspruch 2, **dadurch gekennzeichnet, dass** der Übergang zwischen der zylindrischen Hülse (19) und dem Bund (20) durch einen geringelten Bereich (21) mit bis zum Bund abnehmendem Querschnitt sichergestellt ist, der ermöglicht, die Neigung einer Stange gegenüber der zu der Platte orthogonalen Richtung unter gleichzeitigem Aufrechterhalten der Dichtigkeit um die Stange herum zu begleiten.

4. Austrittsvorrichtung eines Rollladenkastens, nach Anspruch 2, **dadurch gekennzeichnet, dass** der Übergang zwischen der zylindrischen Hülse (19.1) und dem Bund (20.1), oder der Öffnung, durch einen Kragen (24) in einer Ebene im Wesentlichen orthogonal zu der geometrischen Achse der Hülse (19.1) sichergestellt ist.

5. Austrittsvorrichtung eines Rollladenkastens, nach Anspruch 4, **dadurch gekennzeichnet, dass** der Kragen (24) eine Vielzahl von radialen Schlitzen (25) umfasst, um die Verformung dieses Kragens in Abhängigkeit von dem durch eine Stange eingenommenen Neigungswinkel zu erleichtern.

6. Austrittsvorrichtung eines Rollladenkastens, nach Anspruch 5, **dadurch gekennzeichnet, dass** eine Abdeckung (26) aus flexiblem Material jeden radialen Schlitz (25) verschließt.

7. Austrittsvorrichtung eines Rollladenkastens, nach einem der vorhergehenden Ansprüche, **dadurch gekennzeichnet, dass** die zylindrische Hülse (19, 19.1) einen ausreichenden Querschnitt aufweist, um sich an die Ränder der Durchgangsöffnung (10) in dem Brett des Kastens dicht anzulegen und um ein radiales Verschließen der Wände und/oder Trennwände des Bretts, insbesondere wenn das Brett wabenartig ist, sicherzustellen.

8. Austrittsvorrichtung eines Rollladenkastens, nach einem der vorhergehenden Ansprüche, **dadurch gekennzeichnet, dass** die zylindrische Hülse (19, 19.1) einen kreisförmigen Querschnitt aufweist und ihre geometrische Achse zu der Platte (18, 18.1) orthogonal ist, wenn keine Belastungen, die bestrebt sind, sie zu verformen, vorhanden sind.

9. Austrittsvorrichtung eines Rollladenkastens, nach einem der vorhergehenden Ansprüche, **dadurch gekennzeichnet, dass** die Platte (18, 18.1) eine rechteckige Kontur aufweist und die zylindrische Hülse (19, 19.1) in der Nähe einer Ecke der Kontur gelegen ist, wobei ein Bereich (18b) der Platte frei bleibt und Löcher (23, 23.1) für den Durchgang von Mitteln zur Befestigung an einem Kastenbrett umfasst.

10. Austrittsvorrichtung eines Rollladenkastens, nach einem der vorhergehenden Ansprüche, **dadurch gekennzeichnet, dass** die Dichtungsvorrichtung (17, 17.1), die von der Platte (18, 18.1), von der Hülse (19, 19.1) und von dem Bund (20, 20.1) oder Öffnung gebildet ist, aus einem Stück aus einem flexiblen Material, insbesondere aus elastomerem Material ausgebildet ist.

11. Austrittsvorrichtung eines Rollladenkastens, nach einem der vorhergehenden Ansprüche, umfassend eine Aufnahme mit einem Kugelgelenk, das auf einer Seite mit einer Verlängerung (14) für die Kopplung mit einer im Raum befindlichen Betätigungsstange versehen ist, **dadurch gekennzeichnet, dass** die Dichtungsvorrichtung (17, 17.1) auf der von dieser Verlängerung abgewandten Seite angebracht ist.

12. Rollladenkasten mit wabenartigem Brett (2), das durch Trennwände (22) getrennte Kammern umfasst, mit einer Öffnung für den Durchgang (10) eines Betätigungsorgans, Stange oder Gurt, das die Trennwände und Waben im Wesentlichen orthogonal durchgreift, **dadurch gekennzeichnet, dass** er eine Rollladenkastenaustrittsvorrichtung nach einem der vorhergehenden Ansprüche umfasst und dass die Hülse (19) der Dichtungsvorrichtung mit dem Rand der Wände und/oder Trennwände, welche den Durchgang für das Betätigungsorgan begrenzen, in dichtem Kontakt ist.

## Claims

1. Outlet device for a roller shutter box comprising at least one box panel (2) having an orifice (10) for the passage of a control member (7), namely a rod or strap, for controlling the winding and the unwinding of the roller shutter, a box outlet frame (13) and a sealing device (17) for the control member in the region where it passes through the panel,
**characterized in that** the sealing device (17) is formed by a part (17, 17.1) of flexible material comprising a mounting plate (18, 18.1) provided with an orifice (18a) for the passage of the control member and clamped between the outer face of the box panel (2) and the box outlet frame (13), and a cylindrical sheath (19, 19.1) connected to the mounting plate (18, 18.1) and projecting on this mounting plate around the passage orifice (18a) by a length sufficient to pass through the panel and surround a region of the control member inside the box.

2. Outlet device for a roller shutter box, according to Claim 1, **characterized in that** it comprises a collar (20, 20.1), or an aperture, situated at the end of the sheath remote from the mounting plate and having a smaller cross section than the sheath in order to clamp the control member, namely the rod or strap, inside the box once installed.

3. Outlet device for a roller shutter box, according to Claim 2, **characterized in that** the transition between the cylindrical sheath (19) and the collar (20) is provided by an annulate region (21) having a cross section decreasing up to the collar and making it possible to accompany the inclination of a rod with respect to the direction orthogonal to the mounting plate while maintaining sealing around the rod.

4. Outlet device for a roller shutter box, according to Claim 2, **characterized in that** the transition between the cylindrical sheath (19.1) and the collar (20.1), or the aperture, is provided by a flange (24) in a plane substantially orthogonal to the geometric axis of the sheath (19.1).

5. Outlet device for a roller shutter box, according to Claim 4, **characterized in that** the flange (24) comprises a plurality of radial slots (25) to facilitate the deformation of this flange as a function of the angle of inclination assumed by a rod.

6. Outlet device for a roller shutter box, according to Claim 5, **characterized in that** a web (26) of flexible material closes each radial slot (25).

7. Outlet device for a roller shutter box, according to any one of the preceding claims, **characterized in that** the cylindrical sheath (19, 19.1) has a cross section sufficient to be applied in a sealed manner against the edges of the passage orifice (10) in the panel of the box and to provide radial closure of the walls and/or partitions of the panel, in particular when the panel is cellular.

8. Outlet device for a roller shutter box, according to any one of the preceding claims, **characterized in that** the cylindrical sheath (19, 19.1) has a circular cross section, and its geometric axis is orthogonal to the mounting plate (18, 18.1) in the absence of stresses tending to deform it.

9. Outlet device for a roller shutter box, according to any one of the preceding claims, **characterized in that** the mounting plate (18, 18.1) has a rectangular contour, and the cylindrical sheath (19, 19.1) is situated in the vicinity of a corner of the contour, a region (18b) of the mounting plate remaining free and comprising holes (23, 23.1) for the passage of means for fastening to a box panel.

10. Outlet device for a roller shutter box, according to any one of the preceding claims, **characterized in that** the sealing device (17, 17.1) formed by the mounting plate (18, 18.1), by the sheath (19, 19.1) and by the collar (20, 20.1) or aperture is made in one piece of a flexible material, in particular of an elastomer material.

11. Outlet device for a roller shutter box, according to any one of the preceding claims, comprising a housing with a ball joint provided, on one side, with an extension (14) for coupling to an operating rod situated in the premises, **characterized in that** the sealing device (17, 17.1) is installed on the opposite side to this extension.

12. Roller shutter box having a cellular panel (2) comprising chambers separated by partitions (22), with an orifice (10) for the passage of a control member, namely a rod or strap, which passes through the partitions and cells substantially orthogonally, **characterized in that** it comprises an outlet device for a roller shutter box according to any one of the preceding claims, and **in that** the sheath (19) of the sealing device is in sealed contact with the edge of the walls and/or partitions limiting the passage for the control member.
